# EUROPEAN PATENT SPECIFICATION

(11) **EP 3 039 771 B1**
(45) Date of publication and mention of the grant of the patent: **09.05.2018**
(21) Application number: 14839707.8
(22) Date of filing: 28.08.2014
(51) Int. Cl.: H02J 9/00, H02J 3/28, H02J 3/36, H02J 3/00, G05B 13/04, G06Q 10/06, H02J 3/06, H02J 3/32

(54) **SYSTEM AND METHOD FOR ENERGY ASSET SIZING AND OPTIMAL DISPATCH**
SYSTEM UND VERFAHREN ZUR GRÖSSENBESTIMMUNG UND VERSANDOPTIMIERUNG VON ENERGIEANLAGEN
SYSTÈME ET PROCÉDÉ DE CALIBRAGE ET DE DISTRIBUTION OPTIMALE DE RESSOURCES ÉNERGÉTIQUES

(30) Priority: 28.08.2013 US 201361870814 P
(43) Date of publication of application: 06.07.2016
(73) Proprietor: Robert Bosch GmbH, 70442 Stuttgart (DE)
(72) Inventor: KRUPADANAM, Ashish, S., Cupertino, CA 95014 (US); WOO, Claire, San Francisco, CA 94110 (US); AHMED, Jasim, Mountain View, CA 94040 (US); ROY, Biriayak, Sunnyvale, CA 94087 (US); SUBBOTIN, Maksim, V., San Carlos, CA 94070 (US)
(86) International application number: PCT/US2014/053095
(87) International publication number: WO 2015/031581

(56) References cited:
- WO-A1-2008/073453
- JP-A- H09 179 604
- JP-A- H09 179 604
- JP-A- 2011 078 238
- JP-A- 2012 130 167
- KR-A- 20110 034 888
- US-A1- 2012 296 482
- US-B1- 8 457 802

## Description

### TECHNICAL FIELD

This disclosure relates generally to the field of energy systems and, more particularly, to systems and methods for delivering power from and storing energy in an energy system.

### BACKGROUND

Existing energy systems include a grid, a load, a power line system connecting the grid to the load, a controls/computer system, and a human machine interface to provide user access to the energy system through the controls/computer system. Energy assets including energy storage devices, dispatchable energy resources, and renewable energy resources, can also be included and are coupled to the grid to satisfy the energy requirements of one or more customers.

Energy assets within a grid are typically selected and sized for the applications and operated to maximize benefits to the one or more customers. On the electric grid this implies that energy assets such as power plants (e.g., nuclear, coal, natural gas, diesel, combined heat and power (CHP)), and renewable energy sources (e.g., solar, wind), are selected and sized to meet the demands of a maximum possible load. The energy assets are also controlled (dispatched) to control the costs or the storage and delivery of power. For example, certain assets are less expensive to operate but their power output cannot be rapidly adjusted (e.g., coal, nuclear). Other energy assets have faster response times, but are more expensive and are often used sparingly for some applications, such as supplying the peak loads during the day.

Furthermore, renewable energy sources that are available either intermittently, such as wind energy, or during certain times, such as solar energy, cannot always be relied on during, for instance, periods of peak load requirements. The grid, consequently, must compensate for the fluctuating nature of renewable energy supplies using other assets that do not have the limitations of the renewable energy supplies. Consequently, improvements to energy storage control systems that increase the efficiency of storage and utilization of energy from multiple energy sources would be beneficial. US 8 457 802 B1 relates to a method for optimizing the use of electric energy by a facility comprising a plurality of energy assets. JP H09 179604 A relates to a selling power predicting means performing the simulation calculation of energy distribution and selling power amount at a utility system while using a plant simulator based on production schedule data read out of a production schedule setting part.

### BRIEF DESCRIPTION OF THE DRAWINGS

FIG. 1 is schematic block diagram of an energy system.
FIG. 2 is a functional block diagram illustrating an energy asset tool.
FIG. 3 is a block diagram of a process for planning energy asset sizing and optimization of one or more components of the energy system of FIG. 1.
FIG. 4 is a graph illustrating a value stream to provide maximum benefit to an energy system using a planning tool to determine a levelized cost of energy and payback time in years.
FIG. 5 is a graph illustrating cost benefit with and without stacking using a planning tool to determine size of photovoltaic power generation and energy storage of the generated power for a warehouse.
FIG. 6 is a graph illustrating benefits to a customer using photovoltaic energy with storage to provide power for a warehouse.

### DESCRIPTION

For the purposes of promoting an understanding of the principles of the embodiments disclosed herein, reference is now made to the drawings and descriptions in the following written specification. No limitation to the scope of the subject matter is intended by the references. The present disclosure also includes any alterations and modifications to the illustrated embodiments and includes further applications of the principles of the disclosed embodiments as would normally occur to one skilled in the art to which this disclosure pertains.

The invention is defined by the features of the independent claims 1 and 11. Preferred embodiments are defined in the dependent claims.

This disclosure is directed to a method for energy optimization and an energy asset optimization tool to optimally size and to operate energy assets, including energy storage assets. The method and tool include, in one embodiment, a comprehensive method incorporating the use of one or more libraries including value streams models, asset cost models, constraint specifications, load models, optimization algorithms, and operation strategies. A flexible, modular method and tool are also described to enable the user or developer to complement or to enhance the libraries which incorporate other energy supply, control, and transmission applications.

The configuration of energy storage systems can reduce costs by transferring the delivery of energy (power) from times when it is least expensive to times when it is most expensive. Several other benefits with regard to the energy grid are also realized, such as enhancing grid stability including area regulation/control energy (regelenergie), voltage control, and reactive power support. A method is described herein to optimally select, size and operate energy assets including energy storage assets. At present, the electric grid has little capacity to store energy and thus the demand (load) and supply (power output of power plants) need to be in balance at every instant. The addition of energy storage assets, selected as described herein, and whose capabilities are predetermined to fit a particular application, enables the controlled transfer of energy demand, energy storage, and energy supply or transfer. The operation of the energy system is consequently optimized. The optimal sizing and operation of energy assets including energy storage, as described herein, provides a solution to a significant inter-temporal optimization problem in energy storage systems, where considerations or energy storage and power delivery are made based on past, present, and future considerations.

Utilization of energy storage devices, such as electrochemical batteries, in energy systems that supply electrical energy to residential, commercial or other loads brings many new opportunities in energy-savings, reduces requirements for distribution infrastructure, and integrates renewable resources into the electrical grid. Unlike conventional devices, which require a balance of the amount of energy generated and consumed in a grid at every instant of time, storage devices allow temporal shifting of electrical energy generation and consumption. As a consequence, excess renewable energy or low-priced electrical energy from the grid, can be stored and provided on demand when this energy is required or is expensive. At the same time, optimum utilization of energy storage devices, which can present new technical challenges related to the planning and optimal operation of such devices, are solved.

In one embodiment, a method of optimizing an energy system is provided. The method includes specifying first, second, and third criteria for an energy management planning system. The first criteria is indicative of at least one value stream model for the energy system; the second criteria is indicative of at least one asset cost model for the energy system; and the third criteria is indicative of constraints within which the energy system should operate. A processor of the energy management planning system is configured to process the first, second, and third criteria using an optimization algorithm to determine at least one operation strategy for the energy system.

The first criteria, the second criteria, and/or the third criteria may specified by a user via a user interface of the energy management planning system. Value stream models, asset cost models, and system constraints may be provided as user selectable options via the user interface. The optimization algorithm may comprise any one of a plurality of optimization algorithms and may also be selected by a user via the user interface.

The value stream model may comprise any one or more of a peak shaving model, a reduction in demand charges model, a transmission and distribution deferral model, an area regulation model, a customer load shifting model, a time dependent limits on sale and purchase model, an optimized utilization of conventional power plants model, and an arbitrage model. The asset cost model may comprise at least one of a fixed/variable overhead and maintenance costs model and a dynamic performance model.

The processor may be configured to determine a plurality of operation strategies for the energy system based on the specified value stream model(s), cost asset model(s), and system constraints. The energy management planning system may be configured to enable a user to select a preferred operation strategy from the plurality of determined operation strategies via the user interface. The energy management planning system may also be configured to enable the user to select a preferred operation strategy that is not one of the determined operation strategies.

The optimization algorithm executed by the processor may be configured to determine at least one of an energy storage size for at least one energy asset of the energy system, a size for one or more loads of the energy system, an energy dispatch strategy for the energy system, and a value stream for the energy system based on the first, second, and third criteria.

In another embodiment, an energy management planning system is provided. The energy management planning system includes a user interface configured to receive first input, second input, and third input from a user, the first input being indicative of at least one value stream model for the energy system, the second input being indicative of at least one asset cost model for the energy system, and the third input being indicative of constraints within which the energy system should operate. The planning system also includes a processor configured to receive the first, second, and third inputs via the user interface and to process the first, second, and third inputs using an optimization algorithm to determine an operation strategy for the energy system. The operation strategy defines at least one of an energy storage size for at least one energy asset of the energy system, a size for one or more loads of the energy system, an energy dispatch strategy for the energy system, and a value stream for the energy system based on the first, second, and third criteria. The energy management planning system may further comprise a memory having programmed instructions stored therein which define the optimization algorithm(s) for execution by the processor.

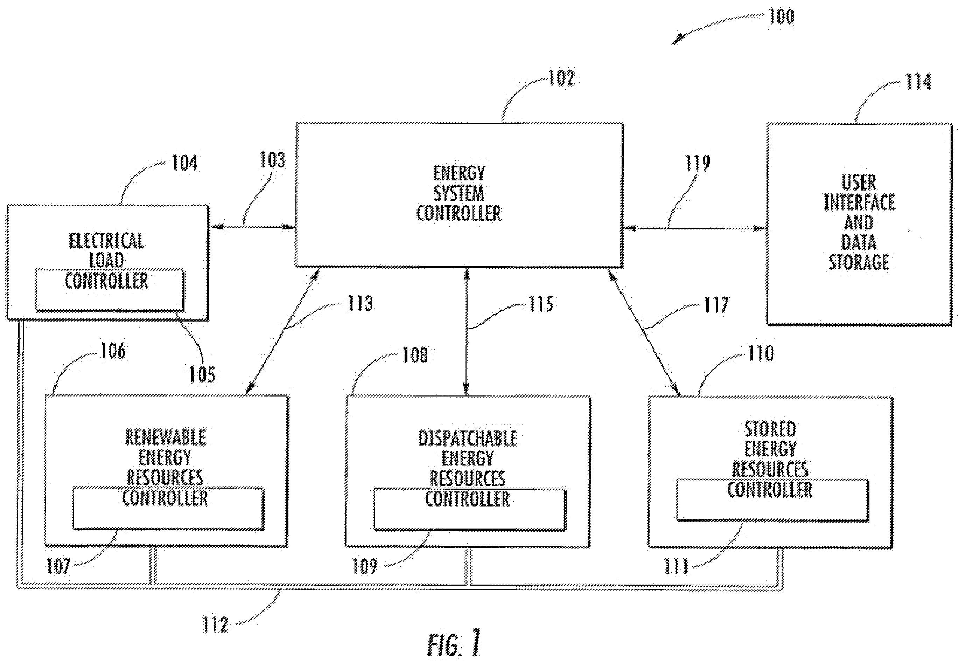

Referring now to the drawings, FIG. 1 illustrates an embodiment of an energy system 100, which includes one or more energy resources, which has been optimized according to the present disclosure. The energy system 100 includes an energy system controller 102 operatively coupled to an electrical load 104, through a communications line 103, which in one embodiment includes one or more electrical loads. The energy system controller 102 is also operatively coupled to one or more energy resources, including renewable energy resources 106 through a communications line 113, dispatchable energy resources 108 through a communications line 115, and stored energy resources 110 through a communications line 117. The electrical load 104, the renewable energy resources 106, the dispatchable energy resources 108, and the stored energy resources 110 are each operatively coupled to a power line 112 which provides for the transmission of energy from one or more of the energy resources to another energy resource and to the electrical load 104. A user interface, or human machine interface (HMI), and a data storage device 114 are also operatively coupled to the energy system controller 102 through a communications line 119. The communications lines 103, 113, 115, 117, and 119 are either hardwired or wireless or a combination thereof.

The energy system controller 102 provides for the control of energy generation and the selective transmission or delivery of power from an energy generation device or an energy storage device to a load or to an energy storage device. The controller 102 is operatively coupled to a controller 105 of the electrical load 104, a controller 107 of the renewable energy resources 106, a controller 109 of the dispatchable energy resources 108, and a controller 111 of the stored energy resources 110. Each of the controllers, 105, 107, 109, and 111 in different embodiments, include processors and memories and receive and provide information in the form of signals to and from the controller 102. In addition, the controllers 105, 107, 109, and 111 in different embodiments include control hardware, including switching devices to provide for the generation and transmission of energy or the storage of energy within the energy system 100. The energy system controller 102 obtains status information from each of the resources 106, 108, and 110 and also provides control signals to the controllers 105, 107, 109, and 111 for the generation and transmission or storage of energy in the system 100. The controller 102 is also operatively coupled to the controller 105 to receive status information of the load 104 indicative of the energy required by the load.

The controller 102 in different embodiments includes a computer, computer system, or programmable device, e.g., multi-user or single-user computers, desktop computers, portable computers and other computing devices. The controller 102 includes, in different embodiments, one or more processors (e.g. microprocessors), and the memory in different embodiments includes random access memory (RAM) devices comprising the main memory storage of the controller 102, as well as any supplemental levels of memory, e.g., cache memories, non-volatile or backup memories (e.g. programmable or flash memories), read-only memories, etc. In addition, the memory in one embodiment includes a memory storage physically located elsewhere from the processing devices and includes any cache memory in a processing device, as well as any storage capacity used as a virtual memory, e.g., as stored on a mass storage device or another computer coupled to controller 102 via a network. The mass storage device in one embodiment includes a cache or other dataspace including databases.

The stored energy resources 110, in different embodiments, includes energy storage devices, such as electrochemical batteries that supply electrical energy to residential loads, commercial loads or other types of loads, and pumped hydro reserves. Utilization of the energy storage devices provides benefits in energy-savings by reducing the requirements for a distribution infrastructure and for integrating renewable energy resources into the electrical grid. Unlike conventional dispatchable resources which require a balance between the amount of energy generated and consumed by a grid at any instant of time, one or more storage devices enable the shifting of electrical energy consumption and energy generation from one period of time to another period of time. As a consequence, the energy generated by one or more renewable resources 106 which exceeds the amount of energy required by a given load at a certain time to satisfy energy demand, in one embodiment, is stored in the energy storage resources 110. Renewable energy resources can include, for example, wind turbines, solar panels including photovoltaic (PV) cells, biomass plants, hydroelectric power plants, geothermal power installations, tidal power installations, and wave power installations. In addition low cost energy which is provided by the electrical grid at a low price during periods of low demand by the load 104 is also being stored. The stored energy is then being provided on demand when energy is required or when other forms of energy are more expensive. Dispatchable energy resources can include, for example, hydro-power, coal power, diesel generators, electrical grid connection, and gas power.

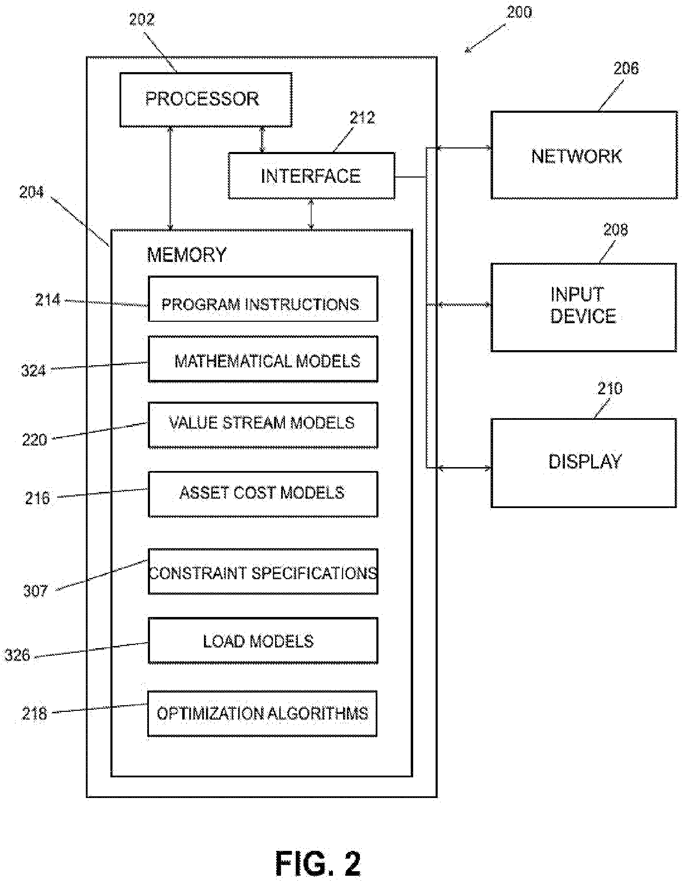

As further illustrated in FIG. 2, an energy asset optimization tool 200 is illustrated. In the embodiment of FIG. 2, the tool 200 includes hardware and software suitable for performing the energy asset optimization. For the purposes of the disclosure, the tool 200, in different embodiments, includes practically any computer, computer system, or programmable device, e.g., multi-user or single-user computers, desktop computers, portable computers and devices, handheld devices, network devices, mobile phones, etc. While the tool 200 is also referred to as being embodied as a "computer" herein, it should be appreciated that the term "computer" may also include other suitable programmable electronic devices. The optimization tool 200 can be incorporated into the controller 102 of energy system 100, for instance.

Tool 200 typically includes at least one processor 202 operatively connected to a memory 204. Processor 202, in different embodiments, includes one or more processors (e.g. microprocessors). The memory 204, in different embodiments, includes a random access memory (RAM) device comprising the main storage of computer 200, as well as any supplemental levels of memory, e.g., cache memories, non-volatile or backup memories (e.g. programmable or flash memories), and read-only memories, etc. In addition, memory 204 in other embodiments, includes one or more memory storage devices physically located elsewhere in the computer 200, e.g., any cache memory in a processor 202, as well as any storage capacity used as a virtual memory, e.g., as stored on a mass storage device or another computer coupled to computer 200 via a network 206.

The computer 200 receives a number of inputs and provides outputs for communicating information externally to the computer 200. For interface with a user or operator, computer 200 typically includes one or more user input devices 208 (e.g., a keyboard, a mouse, a touchpad, a keypad, a microphone, and a touchscreen,). Computer 200 may also include a display 210, which can include CRT monitor, an LCD display panel, an LED display panel, a plasma display panel, and a speaker or other visual and audio display devices. An interface 212 of computer 200, in some embodiments, includes an external physical terminal connected directly or remotely to computer 200, or through another computer communicating with computer 200 via the network 206, modem, or other type of communications device. The network 206, in different embodiments is an internet, a world wide web, or a "cloud" network.

Computer 200 operates under the control of an operating system located in a portion of the memory 204 configured to store program instructions 214. The operating system executes or otherwise relies upon various computer software applications, components, programs, objects, modules, data structures, to provide features of the tool.

In general, the routines executed to implement the embodiments of the invention, whether implemented as part of an operating system or a specific application, component, program, object, module or sequence of instructions are generally known as "computer program code", or simply "program code". The computer program code typically comprises one or more instructions that are resident at various times in various memory and storage devices in a computer, and that, when read and executed by one or more processors in the computer, causes that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution. Examples of computer readable media include but are not limited to physical, recordable type media such as volatile and non-volatile memory devices, floppy and other removable disks, hard disk drives, optical disks (e.g., CD-ROM's, DVD's, etc.), among others, and transmission type media such as digital and analog communication links.

It should be appreciated that the present description provides one or more embodiments, but is not limited to the specific application identified and/or implied. Furthermore, since computer programs can be organized into many different configurations of routines, procedures, methods, modules, objects, and the like, as well as the various manners in which program functionality may be allocated among various software layers that are resident within a typical computer (e.g., operating systems, libraries, application program interfaces (APIs), applications, applets, etc.), it should be appreciated that the present description is not limited to the specific organization and allocation of program functionality described herein.

Those skilled in the art will recognize that the exemplary environment illustrated in FIG. 2 is not intended to limit the present invention. Indeed, those skilled in the art will recognize that other alternative hardware and/or software environments may be used without departing from the scope of the invention.

The described optimization tool, in one or more embodiments, provides the user with a capability of selecting an optimal technology and an optimal size of one or more energy assets. The optimization tool enables a user to determine which of the available assets provide a lowest cost over the entire life of the system for a given application. This includes the incorporation of a rate at which capital is borrowed and the rate of return on the borrowed capital that can be achieved which are embodied in the asset cost models library 216 of FIG. 2.

The optimization tool, in one or more embodiments, provides the user with selectable optimization algorithms which produce the optimal dispatch strategy to satisfy the given load within system constraints. This optimal strategy is then used as a target for the design of a control system configured to optimize the operation of the energy system such as that illustrated in FIG. 1. The memory 204, in one embodiment, includes an optimization algorithm library 218, including one or more optimization algorithms.

The optimization tool, in one or more embodiments, provides the user with a capability to select from a number of value streams to achieve a maximum benefit. The value streams are mathematical models to calculate the benefits that can be achieved through the utilization of the assets. The tool provides the user with the capability of evaluating various value streams operating in tandem as embodied in the value stream models library 220.

The optimization tool, in one or more embodiments, provides a platform for performing sensitivity analysis to evaluate the effectiveness of a number of designs. The tool enables the user to perform sensitivity analysis on the selected technologies and sizes. The user can perturb the loads, asset delivery and storage parameters and constraints, to provide an evaluation of the impact of the perturbations on the costs. The perturbation algorithms, in one embodiment, are located in the optimization algorithm 218.

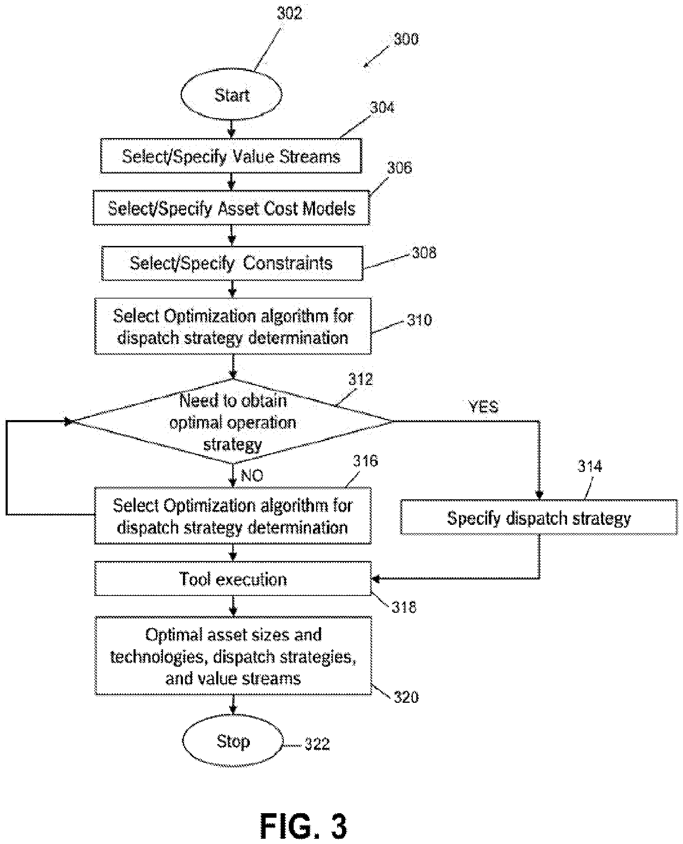

In one embodiment, the optimization tool operates according to the block diagram 300 of FIG. 3. FIG. 3 illustrates a process for planning energy asset sizing and optimization of one or more components of an energy system, such as that illustrated in FIG. 1. The process 300 enables a user to select from a plurality of available library options, some of which have been described above, which act as inputs to the optimization process. The user starts the process (block 302) by selecting and/or specifying one or more of the value streams (block 304) available in the library 220 of FIG. 2. In different embodiments, the value stream models library 220 includes one or more value stream models. For instance, in one or more embodiments, the following value streams models are used, each of which is provided as part of the value streams models library 220. Examples of value streams models include:
a.) Peak Shaving Model: Determines how to supplement the normal supply of energy required during periods of high demand. Energy storage is used to reduce the demand that needs to be supplied from energy generating assets (power plants). The difference between the load and energy generation is supplied from the storage assets which includes those storage assets describe herein.
b.) Reduction in Demand Charges Model: Customers often are charged for energy consumption (kWh) and also the peak energy consumption (in kW) by the utilities. This is done to recoup the costs of sizing the transmission and distribution infrastructure to accommodate the peak loads. Storage can be used to supply the peak loads of the customer while charging during off-peak times. This reduces the demand charges for the customer.
c.) Transmission and Distribution Deferral Model: Transmission and distribution infrastructure costs can be reduced by following the scheme outlined in b.) where the customer peak loads are reduced.
d.) Area Regulation Model: The electric grid needs certain asset operators to have spinning reserves to provide energy or accept energy at short notice to match the fluctuations in the load. These are further divided into primary, secondary and tertiary area regulation markets, often involving significantly higher prices for electricity. Storage assets can be used to provide or accept energy as required by the utility.
e.) Customer Load Shifting Model: Customers are often charged different prices for energy at different times to account for different costs of production and availability of renewables. The addition of storage assets enables the customer to realize benefits by moving their grid consumption from peak hours to off-peak hours.
f.) Time Dependent Limits on Sale and Purchase Model: Utilities may limit the usage of energy by certain customers (such as industrial customers) at certain times if there are shortages in production. Customers who add their own assets (generation or storage) are able to operate even in the presence of such limits. The tool incorporates the ability to set such limits on each asset.
g.) Optimized Utilization of Conventional Power Plants Model:
   Conventional power plants run most cost-effectively if they do not need to ramp up or down. Due to the impact of fluctuating energy provided by renewable sources, conventional power plants are forced to ramp. The need to ramp conventional power plants up or down can be reduced by the addition of storage assets. The benefits realized are more efficient operation of the plant and a reduction in operation and maintenance (O&M) costs.
h.) Arbitrage model: Electricity traders with access to storage assets can trade in the energy stock market with greater flexibility enabling greater profits. For example, traders of wind power are able to decouple the actual trade (supply) from the generation event, and sell at the most opportune time to realize highest sale prices.

The user, after block 304, determines an asset costs model by selecting and/or specifying the asset costs model library 216 (block 306). In different embodiments, the asset costs model library 216 includes one or more assets costs models. These include mathematical cost models for the different assets and technologies under consideration. The costs associated with providing energy from the asset or of utilization of the asset include components such as:
a.) Fixed, variable and overhead and maintenance (O&M) costs. Energy assets such as power plants or storage incur upfront fixed costs for their procurement and installation. Operation of the assets incurs variable costs such as fuel costs. O&M costs are incurred both as costs that are a function of the time when the asset is available (e.g. personnel costs) and also as a function of the amount of use (periodic maintenance).
b.) Dynamic performance models. The performance of the system may be mathematically modeled to incorporate relevant features that have impact on the costs.
   i.) Efficiency of the asset. Efficiency can vary as a function of the state of the system. For example, a battery's efficiency depends upon its power output and state of charge.
   ii.) Constraints of the asset. The asset may have constraints that are dependent upon its state. For example, a battery's power output is limited to different values at different states of charge and at different points in its life.
   iii.) Life models. The asset may need complete or partial replacement at regular intervals or based upon usage. The cost of these replacements needs to be mathematically modeled. Furthermore, the remaining life of the asset is an input to the dynamic performance models described above to determine degradation of performance over time.

The user, after block 306, specifies the constraints to which the energy system is designed using a constraint specifications library 307 of FIG. 2 to specify the constraints within which the system is being designed to operate (block 308). The user selects the constraints to which the energy system is being designed and inputs those constraints through the input device to the interface 212. The constraints, in one embodiment, include the specified emergency or backup reserves for the assets. For example, a fraction of the energy storage system, in one embodiment, is reserved for emergency backup. Also, the energy storage assets, in this or another embodiment, are partitioned among value streams to satisfy certain predetermined requirements. For example, area regulation requires guaranteed delivery of the energy when the grid requires it. This may be achieved by partitioning the storage asset to reserve energy for the area regulation commitments.

Once the constraints are selected at block 308, one or more optimization algorithms for a dispatch strategy determination are selected from a number of optimization algorithms located in the optimizations algorithm library 218 of FIG. 2. The one or more optimization algorithms are selected at block 310 of FIG. 3. The tool provides the user with options to do the following:
a.) Obtain optimal operation strategy for the assets using various available algorithms.
b.) Specify operation strategy for the assets. The user may specify a simpler algorithm to operate the assets within the capabilities of the control system. The tool in this case enables the evaluation and minimization of costs with this control strategy.

The user then executes the tool to obtain the results described above (block 312). At this block the user reviews the results of the optimization strategies to determine whether one of the optimization strategies is preferred. If one of the dispatch strategies is preferred, the preferred dispatch strategy is selected (block 314). If, however, the results of the dispatch strategy determination are not desirable, a different one or more optimization dispatch strategies are selected (block 316). If selected (block 316), the optimal operation strategies based on the selected strategies are obtained once more (block 312). If at this time, the operation strategy is acceptable, the operation dispatch strategy is specified at block 314. If not, a new one or more optimization strategies is selected (block 316) until one of the dispatch strategies is acceptable (block 314). Once the dispatch strategy is specified, the user executes the tool (block 318) to finalize the optimal asset sizes and technologies, dispatch strategies, and value streams (block 320). After final selection (block 320), the tool provides the final output of an optimized energy system and stops (block 322).

A mathematical model library 324 (see FIG. 2) is provided as a part of the tool. The library 324 includes one or more modules, each of which represents a mathematical model of a given component. The mathematical model provides a model of the behavior of modules or component with all the characteristics necessary to sufficiently provide an accurate simulation of the module or component within the energy system. The mathematical model of each module or component is a static model, a dynamic model or a combined static and dynamic model depending on the operating characteristics of the module or component. The operating characteristics include in different embodiments, the underlying physics of energy consumption, energy generation, and/or energy conversion processes which occur in the real physical system or device. Dynamic models capture the evolution or changes to the internal states of a considered system. The influence on these states from external inputs provides the measured outputs of the system. As a consequence, a given mathematical model of the energy system component is capable of simulating characteristics important for computation of optimal power profiles. These characteristics include but are not limited to ramp rates as functions of external inputs and internal states of devices, operating power limits, dynamic transients in response to applied inputs, and other features.

Mathematical models in the library 324 include models of one or more energy resources including renewable energy resources, dispatchable energy resources, and stored energy resources. Models include models for wind turbines, photovoltaic installations, diesel generators, hydro turbines, and combined heat and power (CHP) plants. Storage models include various types of electrochemical battery storage systems such as flow batteries of various chemistries, lead-acid batteries, and Lithium-ion batteries, thermal storage systems, hydro-storage systems and combinations (hybrids) of various storage technologies. As an example, a dynamic model of an energy storage module represented by electrochemical flow battery includes state-of-charge of the battery, variables capturing age of the battery, available charge and discharge power limits for the battery as functions time and state-of-charge of the battery, and efficiency of the battery as a function of state-of-charge and other internal parameters. Load modules can be represented with dynamic models of the considered devices, static models defined by maps from inputs to outputs, as well as time-series data sets.

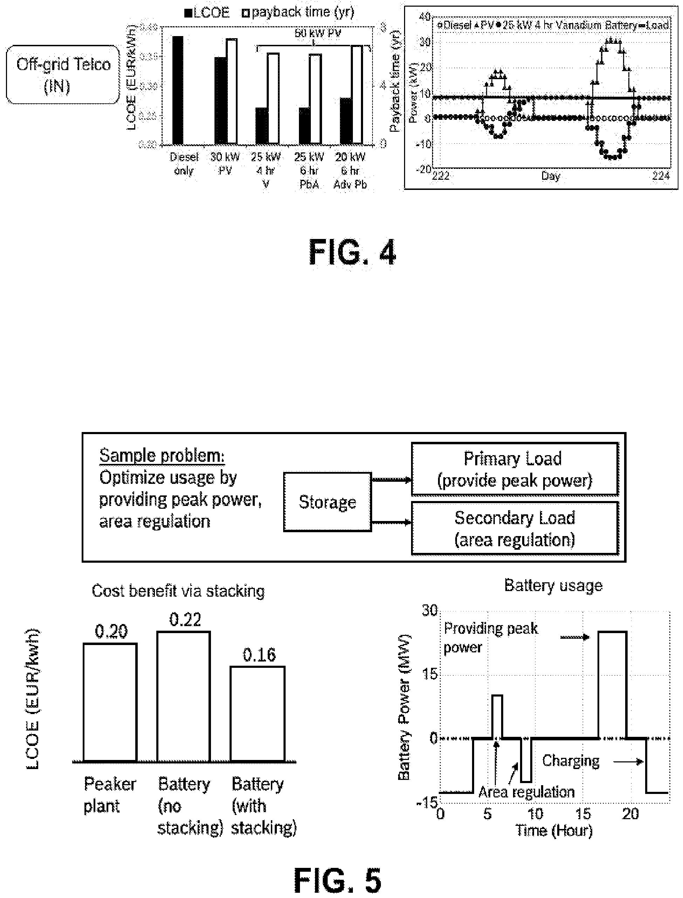

Different storage technologies result in different optimal storage sizes. For example as illustrated in the graph of FIG. 4, an example of a value stream to provide maximum benefit to an energy system using a planning tool to determine a levelized cost of energy and payback time in years is illustrated. In FIG. 4, the graph is illustrates a telecommunications tower that is supplied power by a diesel generator. The tool, described herein, is used to evaluate the benefits of adding a photovoltaic (PV) source with the generator, and batteries and a PV source with the generator. As can be seen from the FIG. 4, different battery technologies provide different levels of benefits. The tool enables the selection of the PV size, battery size, and the type of technology most appropriate for this application.

FIG. 5 illustrates one embodiment of a cost benefit, with and without stacking, using one embodiment of the planning tool to determine a size of PV power generation system and an energy storage system as a component of an energy system providing power for a warehouse by determining two or more value streams to achieve a maximum benefit. In FIG. 5, the tool indicates that using storage for more than a single value stream can result in storage being cheaper than a conventional peaker plant. Such a conclusion is enabled by the tool's unique capability of evaluating multiple value streams together.

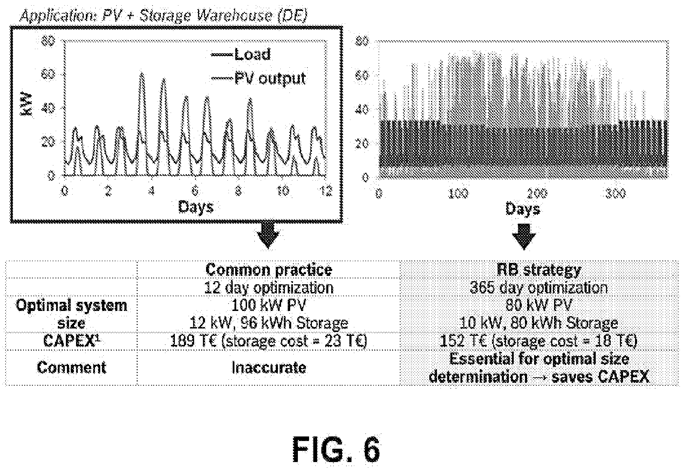

Another advantage of the current tool over existing alternatives, which determine sizes of an energy storage device or system based on a limited amount of time (e.g. 12 representative days of the year), is the tool's ability to determine optimal sizes based on the total system life (e.g. 20 years). The current common practice is to determine an optimization over a 12 day time period. (See FIG. 6) By using a 365 day lifespan based on the present disclosure, an optimal size is determined which reduces costs. The present disclosure also determines a more optimal solution to provide greater benefits to a customer over a period of a 20 year lifespan. In this application, PV power generation together with storage is used to provide power for the warehouse. As illustrated in FIG. 6, the optimal sizes for PV power generation and storage are different based on the comprehensiveness of the time period evaluated.

While a planning tool has been described that is configured to provide optimal energy generation and energy storage devices and systems, the planning tool, in other embodiments, provides an optimal size of a load and an optimal management of the load. One or more libraries of load models 326 are included. The load models 326 include, for instance, the loads of electric machinery, heating loads, and thermal loads. The planning tool, while directed to finding an optimal load for known energy storage and energy generation systems and device, generally incorporates the process(es) as described herein. The value streams for changing energy consumption patterns are defined (e.g. lower prices during certain times), cost models for customer energy generation assets are created (e.g. CHP plants, photovoltaic modules), constraints on assets and loads are specified such as which loads can be shifted (e.g. internet connected washing machines, dishwashers) and which cannot (e.g. lighting loads), and optimization algorithm/specified strategy is selected.

It will be appreciated that variants of the above-disclosed and other features and functions, or alternatives thereof, may be desirably combined into many other different systems, applications or methods. Various presently unforeseen or unanticipated alternatives, modifications, variations or improvements may be subsequently made by those skilled in the art that are also intended to be encompassed by the following embodiments. The following embodiments are provided as examples and are not intended to be limiting.

## Claims

1. A method of optimizing an energy system, the energy system including at least one energy asset, the method comprising:
specifying first criteria for an energy management planning system (200), the first criteria being indicative of at least one value stream model (220) for the energy system;
specifying second criteria for the energy management planning system (200), the second criteria being indicative of at least one asset cost model (216) for the energy system;
specifying third criteria for the energy management planning system (200), the third criteria being indicative of constraints (307) within which the energy system should operate; and
using a processor (202) of the energy management planning system (200) to determine at least one operation strategy for the energy system based on the first, second, and third criteria,
**characterized in that**
a plurality of value stream models (220) are provided as selectable options for a user via a user interface (208) of the energy management planning system (200).

2. The method of claim 1, wherein at least one of the first criteria, the second criteria, and the third criteria is specified by a user via the user interface (208) of the energy management planning system (200).

3. The method of claim 2, wherein each of the first criteria, the second criteria, and the third criteria is specified by a user via the user interface (208) of the energy management planning system (200).

4. The method of claim 2, wherein the user interface (208) is configured to enable a user to make selections which identify at least one of the second criteria, and the third criteria for the energy management planning system (200).

5. The method of claim 1, further comprising:
specifying fourth criteria for the energy management planning system (200), the fourth criteria being indicative of an optimization algorithm (218) to be used by the processor (202) in determining the operation strategy,
wherein the processor (202) is configured to perform the optimization algorithm (218) indicated by the fourth criteria using the first criteria, the second criteria, and the third criteria.

6. The method of claim 1, wherein the at least one value stream model (220) comprises one or more of a peak shaving model, a reduction in demand charges model, a transmission and distribution deferral model, an area regulation model, a customer load shifting model, a time dependent limits on sale and purchase model, an optimized utilization of conventional power plants model, and an arbitrage model.

7. The method of claim 1, wherein the at least one asset cost model (216) comprises at least one of a fixed/variable overhead and maintenance costs model and a dynamic performance model.

8. The method of claim 1, wherein the processor (202) is configured to determine a plurality of operation strategies for the energy system based on the first, second, and third criteria, and
wherein the energy management planning system (200) is configured to enable a user to select a preferred operation strategy from a plurality of operation strategies for the energy system via a user interface (208) of the energy management system, the plurality of operation strategies including at least the determined operation strategies.

9. The method of claim 8, wherein the energy management planning system (200) is configured to enable the user to select a preferred operation strategy that is not one of the determined operation strategies.

10. The method of claim 1, wherein the processor (202) is configured to determine at least one of an energy storage size for at least one energy asset of the energy system, a size for one or more loads of the energy system, an energy dispatch strategy for the energy system, and a value stream for the energy system based on the first, second, and third criteria.

11. An energy management planning system (200) for an energy system comprising:
a user interface (208) configured to receive first input, second input, and third input from a user, the first input being indicative of at least one value stream model (220) for the energy system, the second input being indicative of at least one asset cost model (216) for the energy system, and the third input being indicative of constraints (307) within which the energy system should operate; and
a processor (202) configured to receive the first, second, and third inputs via the user interface (208) and to process the first, second, and third inputs using an optimization algorithm (218) to determine an operation strategy for the energy system,
wherein the operation strategy defines at least one of an energy storage size for at least one energy asset of the energy system, a size for one or more loads of the energy system, an energy dispatch strategy for the energy system, and a value stream for the energy system based on the first, second, and third input,
**characterized in that**
a plurality of the value stream models (220) are provided as selectable options for a user to select as the first input via the user interface (208) of the energy management planning system (200).

12. The energy management planning system (200) of claim 11, further comprising:
a memory having programmed instructions stored therein, the programmed instructions defining the optimization algorithm (218).

13. The energy management planning system (200) of claim 11, wherein the at least one value stream model (220) comprises one or more of a peak shaving model, a reduction in demand charges model, a transmission and distribution deferral model, an area regulation model, a customer load shifting model, a time dependent limits on sale and purchase model, an optimized utilization of conventional power plants model, and an arbitrage model.

14. The energy management planning system (200) of claim 11, wherein the at least one asset cost model (216) comprises at least one of a fixed/variable overhead and maintenance costs model and a dynamic performance model.

15. The energy management planning system (200) of claim 14, wherein the asset cost models are provided as selectable options for a user to select as the second input via the user interface (208) of the energy management planning system (200).

16. The energy management planning system (200) of claim 11, wherein the user interface (208) is configured to receive a fourth input, the fourth input specifying the optimization algorithm (218) for the processor (202).

## Patentansprüche

1. Verfahren zum Optimieren eines Energiesystems, wobei das Energiesystem mindestens ein Energie-Asset enthält, wobei das Verfahren Folgendes umfasst:
Spezifizieren erster Kriterien für ein Energiemanagementplanungssystem (200), wobei die ersten Kriterien mindestens ein Wertstrommodell (220) für das Energiesystem anzeigen;
Spezifizieren zweiter Kriterien für das Energiemanagementplanungssystem (200), wobei die zweiten Kriterien mindestens ein Asset-Kostenmodell (216) für das Energiesystem anzeigen;
Spezifizieren dritter Kriterien für das Energiemanagementplanungssystem (200), wobei die Kriterien Beschränkungen (307) anzeigen, innerhalb derer das Energiesystem arbeiten sollte; und
Verwenden eines Prozessors (202) des Energiemanagementplanungssystems (200) zum Bestimmen mindestens einer Arbeitsstrategie für das Energiesystem auf Basis der ersten, zweiten und dritten Kriterien,
**dadurch gekennzeichnet, dass**
mehrere Wertstrommodelle (220) als wählbare Optionen für einen Benutzer über eine Benutzerschnittstelle (208) des Energiemanagementplanungssystems (200) bereitgestellt werden.

2. Verfahren nach Anspruch 1, wobei mindestens eines der ersten Kriterien, der zweiten Kriterien und der dritten Kriterien durch einen Benutzer über die Benutzerschnittstelle (208) des Energiemanagementplanungssystems (200) spezifiziert wird.

3. Verfahren nach Anspruch 2, wobei jedes der ersten Kriterien, der zweiten Kriterien und der dritten Kriterien durch einen Benutzer über die Benutzerschnittstelle (208) des Energiemanagementplanungssystems (200) spezifiziert wird.

4. Verfahren nach Anspruch 2, wobei die Benutzerschnittstelle (208) konfiguriert ist, einem Benutzer zu ermöglichen, Auswahlen zu treffen, die mindestens eines der zweiten Kriterien und der dritten Kriterien für das Energiemanagementplanungssystem (200) identifizieren.

5. Verfahren nach Anspruch 1, weiterhin umfassend:
Spezifizieren vierter Kriterien für das Energiemanagementplanungssystem (200), wobei die vierten Kriterien einen durch den Prozessor (202) beim Bestimmen der Arbeitsstrategie zu verwendenden Optimierungsalgorithmus (218) anzeigen,
wobei der Prozessor (202) konfiguriert ist zum Durchführen des durch die vierten Kriterien unter Verwendung der ersten Kriterien, der zweiten Kriterien und der dritten Kriterien angezeigten Optimierungsalgorithmus (218).

6. Verfahren nach Anspruch 1, wobei das mindestens eine Wertstrommodell (220) eines oder mehrere eines Peak-Shaving-Modells, eines Modells der Reduktion bei den Entnahmeentgelten, eines Übertragungs- und Verteilungsaufschubmodells, eines Bereichsregelungsmodells, eines Kundenlastverschiebungsmodells, eines Modells zeitabhängiger Grenzen auf Vertrieb und Kauf, eines Modells der optimierten Nutzung herkömmlicher Kraftwerke und eines Arbitrage-Modells umfasst.

7. Verfahren nach Anspruch 1, wobei das mindestens eine Asset-Kostenmodell (216) mindestens eines eines festen/variablen Gemein- und Wartungskostenmodells und eines dynamischen Leistungsmodells umfasst.

8. Verfahren nach Anspruch 1, wobei der Prozessor (202) konfiguriert ist zum Bestimmen von mehreren Arbeitsstrategien für das Energiesystem auf Basis der ersten, zweiten und dritten Kriterien, und
wobei das Energiemanagementplanungssystem (200) konfiguriert ist, einem Benutzer zu ermöglichen, eine bevorzugte Arbeitsstrategie unter mehreren Arbeitsstrategien für das Energiesystem über eine Benutzerschnittstelle (208) des Energiemanagementsystems zu wählen, wobei die mehreren Arbeitsstrategien mindestens die bestimmten Arbeitsstrategien beinhalten.

9. Verfahren nach Anspruch 8, wobei das Energiemanagementplanungssystem (200) dazu konfiguriert ist, dem Benutzer zu ermöglichen, eine bevorzugte Arbeitsstrategie zu wählen, bei der es sich nicht um eine der bestimmten Arbeitsstrategien handelt.

10. Verfahren nach Anspruch 1, wobei der Prozessor (202) konfiguriert ist zum Bestimmen mindestens einer einer Energiespeichergröße für mindestens ein Energie-Asset des Energiesystems, einer Größe für eine oder mehrere Lasten des Energiesystems, einer Energieverteilungsstrategie für das Energiesystem und eines Wertstroms für das Energiesystem auf Basis der ersten, zweiten und dritten Kriterien.

11. Energiemanagementplanungssystem (200) für ein Energiesystem, umfassend:
eine Benutzerschnittstelle (208), die konfiguriert ist zum Empfangen einer ersten Eingabe, einer zweiten Eingabe und einer dritten Eingabe von einem Benutzer, wobei die erste Eingabe mindestens ein Wertstrommodell (220) für das Energiesystem anzeigt, die zweite Eingabe mindestens ein Asset-Kostenmodell (216) für das Energiesystem anzeigt und die dritte Eingabe Beschränkungen (307), innerhalb derer das Energiesystem arbeiten sollte, anzeigt; und
einen Prozessor (202), der konfiguriert ist zum Empfangen der ersten, zweiten und dritten Eingabe über die Benutzerschnittstelle (208) und zum Verarbeiten der ersten, zweiten und dritten Eingabe unter Verwendung eines Optimierungsalgorithmus (218), um eine Arbeitsstrategie für das Energiesystem zu bestimmen,
wobei die Arbeitsstrategie mindestens eines einer Energiespeichergröße für mindestens einen Energie-Asset des Energiesystems, einer Größe für eine oder mehrere Lasten des Energiesystems, einer Energieverteilungsstrategie für das Energiesystem und eines Wertstroms für das Energiesystem auf Basis der ersten, zweiten und dritten Eingabe definiert,
**dadurch gekennzeichnet, dass**
mehrere der Wertstrommodelle (220) als wählbare Optionen für einen Benutzer bereitgestellt werden zum Wählen als die erste Eingabe über die Benutzerschnittstelle (208) des Energiemanagementplanungssystems (200).

12. Energiemanagementplanungssystem (200) nach Anspruch 11, weiterhin umfassend:
einen Speicher mit darin gespeicherten programmierten Anweisungen, wobei die programmierten Anweisungen den Optimierungsalgorithmus (218) definieren.

13. Energiemanagementplanungssystem (200) nach Anspruch 11, wobei das mindestens eine Wertstrommodell (220) eines oder mehrere eines Peak-Shaving-Modells, eines Modells der Reduktion bei den Entnahmeentgelten, eines Übertragungs- und Verteilungsaufschubmodells, eines Bereichsregelungsmodells, eines Kundenlastverschiebungsmodells, eines Modells zeitabhängiger Grenzen auf Vertrieb und Kauf, eines Modells der optimierten Nutzung herkömmlicher Kraftwerke und eines Arbitrage-Modells umfasst.

14. Energiemanagementplanungssystem (200) nach Anspruch 11, wobei das mindestens eine Asset-Kostenmodell (216) mindestens eines eines festen/variablen Gemein- und Wartungskostenmodells und eines dynamischen Leistungsmodells umfasst.

15. Energiemanagementplanungssystem (200) nach Anspruch 14, wobei die Asset-Kostenmodelle als wählbare Optionen für einen Benutzer bereitgestellt sind zum Wählen als die zweite Eingabe über die Benutzerschnittstelle (208) des Energiemanagementplanungssystems (200).

16. Energiemanagementplanungssystem (200) nach Anspruch 11, wobei die Benutzerschnittstelle (208) konfiguriert ist zum Empfangen einer vierten Eingabe, wobei die vierte Eingabe den Optimierungsalgorithmus (218) für den Prozessor (202) spezifiziert.

## Revendications

1. Procédé d'optimisation d'un système d'énergie, le système d'énergie comportant au moins un actif énergétique, le procédé comprenant :
la spécification de premiers critères pour un système de planification de gestion d'énergie (200), les premiers critères étant représentatifs d'au moins un modèle de chaîne de valeur (220) pour le système d'énergie ;
la spécification de deuxièmes critères pour le système de planification de gestion d'énergie (200), les deuxièmes critères étant représentatifs d'au moins un modèle de coût des actifs (216) pour le système d'énergie ;
la spécification de troisièmes critères pour le système de planification de gestion d'énergie (200), les troisièmes critères étant représentatifs de contraintes (307) à l'intérieur desquelles le système d'énergie devrait fonctionner ; et
l'utilisation d'un processeur (202) du système de planification de gestion d'énergie (200) pour déterminer au moins une stratégie de fonctionnement pour le système d'énergie sur la base des premiers, deuxièmes et troisièmes critères,
**caractérisé en ce que**
une pluralité de modèles de chaîne de valeur (220) sont prévus en tant qu'options sélectionnables pour un utilisateur par le biais d'une interface utilisateur (208) du système de planification de gestion d'énergie (200).

2. Procédé de la revendication 1, dans lequel au moins un des premiers critères, des deuxièmes critères et des troisièmes critères est spécifié par un utilisateur par le biais de l'interface utilisateur (208) du système de planification de gestion d'énergie (200).

3. Procédé de la revendication 2, dans lequel chacun des premiers critères, des deuxièmes critères et des troisièmes critères est spécifié par un utilisateur par le biais de l'interface utilisateur (208) du système de planification de gestion d'énergie (200).

4. Procédé de la revendication 2, dans lequel l'interface utilisateur (208) est configurée pour permettre à un utilisateur de faire des sélections qui identifient au moins un des deuxièmes critères et des troisièmes critères pour le système de planification de gestion d'énergie (200).

5. Procédé de la revendication 1, comprenant en outre :
la spécification de quatrièmes critères pour le système de planification de gestion d'énergie (200), les quatrièmes critères étant représentatifs d'un algorithme d'optimisation (218) devant être utilisé par le processeur (202) dans la détermination de la stratégie de fonctionnement,
dans lequel le processeur (202) est configuré pour effectuer l'algorithme d'optimisation (218) indiqué par les quatrièmes critères en utilisant les premiers critères, les deuxièmes critères et les troisièmes critères.

6. Procédé de la revendication 1, dans lequel l'au moins un modèle de chaîne de valeur (220) comprend un ou plusieurs modèles parmi un modèle d'écrêtement des pointes, un modèle de réduction des taxes fixes, un modèle de report de transmission et de distribution, un modèle de régulation de zone, un modèle de déplacement de charge de la période de pointe d'un client, un modèle de limites de vente et d'achat dépendantes du temps, un modèle d'utilisation optimisée de centrales électriques conventionnelles, et un modèle d'arbitrage.

7. Procédé de la revendication 1, dans lequel l'au moins un modèle de coût des actifs (216) comprend un modèle de coûts indirects et de maintenance fixes/variables et/ou un modèle de performance dynamique.

8. Procédé de la revendication 1, dans lequel le processeur (202) est configuré pour déterminer une pluralité de stratégies de fonctionnement pour le système d'énergie sur la base des premiers, deuxièmes et troisièmes critères, et
dans lequel le système de planification de gestion d'énergie (200) est configuré pour permettre à un utilisateur de sélectionner une stratégie de fonctionnement préférée parmi une pluralité de stratégies de fonctionnement pour le système d'énergie par le biais d'une interface utilisateur (208) du système de gestion d'énergie, la pluralité de stratégies de fonctionnement comportant au moins les stratégies de fonctionnement déterminées.

9. Procédé de la revendication 8, dans lequel le système de planification de gestion d'énergie (200) est configuré pour permettre à l'utilisateur de sélectionner une stratégie de fonctionnement préférée qui n'est pas une des stratégies de fonctionnement déterminées.

10. Procédé de la revendication 1, dans lequel le processeur (202) est configuré pour déterminer au moins un élément parmi une capacité de stockage d'énergie pour au moins un actif énergétique du système d'énergie, une taille pour une ou plusieurs charges du système d'énergie, une stratégie de répartition d'énergie pour le système d'énergie et une chaîne de valeur pour le système d'énergie sur la base des premiers, deuxièmes et troisièmes critères.

11. Système de planification de gestion d'énergie (200) pour un système d'énergie comprenant :
une interface utilisateur (208) configurée pour recevoir une première entrée, une deuxième entrée et une troisième entrée d'un utilisateur, la première entrée étant représentative d'au moins un modèle de chaîne de valeur (220) pour le système d'énergie, la deuxième entrée étant représentative d'au moins un modèle de coût des actifs (216) pour le système d'énergie, et la troisième entrée étant représentative de contraintes (307) à l'intérieur desquels le système d'énergie devrait fonctionner ; et
un processeur (202) configuré pour recevoir les première, deuxième et troisième entrées par le biais de l'interface utilisateur (208) et pour traiter les première, deuxième et troisième entrées en utilisant un algorithme d'optimisation (218) pour déterminer une stratégie de fonctionnement pour le système d'énergie,
dans lequel la stratégie de fonctionnement définit au moins un élément parmi une capacité de stockage d'énergie pour au moins un actif énergétique du système d'énergie, une taille pour une ou plusieurs charges du système d'énergie, une stratégie de répartition d'énergie pour le système d'énergie et une chaîne de valeur pour le système d'énergie sur la base de la première, la deuxième et la troisième entrée,
**caractérisé en ce que**
une pluralité des modèles de chaîne de valeur (220) sont prévus en tant qu'options sélectionnables à sélectionner par un utilisateur comme la première entrée par le biais de l'interface utilisateur (208) du système de planification de gestion d'énergie (200).

12. Système de planification de gestion d'énergie (200) de la revendication 11, comprenant en outre :
une mémoire ayant des instructions programmées stockées à l'intérieur, les instructions programmées définissant l'algorithme d'optimisation (218).

13. Système de planification de gestion d'énergie (200) de la revendication 11, dans lequel l'au moins un modèle de chaîne de valeur (220) comprend un ou plusieurs modèles parmi un modèle d'écrêtement des pointes, un modèle de réduction des taxes fixes, un modèle de report de transmission et de distribution, un modèle de régulation de zone, un modèle de déplacement de charge de la période de pointe d'un client, un modèle de limites de vente et d'achat dépendantes du temps, un modèle d'utilisation optimisée de centrales électriques conventionnelles, et un modèle d'arbitrage.

14. Système de planification de gestion d'énergie (200) de la revendication 11, dans lequel l'au moins un modèle de coût des actifs (216) comprend un modèle de coûts indirects et de maintenance fixes/variables et/ou un modèle de performance dynamique.

15. Système de planification de gestion d'énergie (200) de la revendication 14, dans lequel les modèles de coût des actifs sont prévus en tant qu'options sélectionnables à sélectionner par un utilisateur comme la deuxième entrée par le biais de l'interface utilisateur (208) du système de planification de gestion d'énergie (200).

16. Système de planification de gestion d'énergie (200) de la revendication 11, dans lequel l'interface utilisateur (208) est configurée pour recevoir une quatrième entrée, la quatrième entrée spécifiant l'algorithme d'optimisation (218) pour le processeur (202) .
